# EUROPEAN PATENT APPLICATION

(11) **EP 1 146 321 A2**
(43) Date of publication of application: **17.10.2001**
(21) Application number: 01850065.2
(22) Date of filing: 09.04.2001
(51) Int. Cl.: G01F 19/00

(54) **Measuring spoon**

(30) Priority: 10.04.2000 SE 0001323; 28.04.2000 SE 0001538
(71) Applicant: Westrin, Pär, 590 62 Linghem (SE)
(72) Inventor: Westrin, Pär, 590 62 Linghem (SE)
(74) Representative: Berglund, Erik Wilhelm

(57) **Abstract**

Device for the measuring of different volumes constituted of an elongate body (1) that in a first side in each end is provided with indentations (2 and 3 respectively) with a first and a second measure volume. On an opposed side of the elongate body reception space is (4 and 5 respectively) are arranged corresponding to a third and fourth measuring volume in the shape of indentation in the first side. These indentations has been given such a height that a filling of the indentations on the first side up to the level of the tips of the indentations corresponds to a fifth and a sixth measuring volume.

## Description

At the preparation of food and baking it is frequently necessary to measure the ingredients in order to achieve good precision and repeatability in the work, at this one uses measures. These measures constitute sets of ladle or spoon like measures with different volumes. Frequently these measures are gathered on a key ring. Whether they are gathered on a key ring or separate and removed from this the handling is not particularly practical and if the different measures are separate it is not unusual that these relatively soon end up in different locations. When they are separately located it can furthermore be difficult to decide with the one glance whether it is the right measure or not, since on does not have any bases for comparison and one is in reality forced to find the measure size written on the measure, which writing frequently is difficult to read.

In view of the above problem there is a need of better devices for measuring volumes at for instance cocking, baking or medication. This object is in accordance with the invention solved with a volume measuring device including in its simplest form two from each other facing reception spaces or the like for that which is to be measured, for instance with the shape of two small cups facing away from each other and with different volumes. Each reception space constitute in this case a measure. In a further development of the inventive thought form the different volumes measures constituting the reception spaces may have a common bottom.

In an advantageous further development of the inventive thought at least one of the reception spaces includes an indentation in the bottom or at the side. In this way a filling level is defined in this reception space, when the object that is to be measured is precisely level with the tip of the indentation, as a part volume that also can be used for measuring, that is an additional measure is integrated in the same device. If the indentation is located centrally and given a doom-shaped tip one can also achieve essentially unchanged volume up to the tip of the indentation even if a certain obliqueness of the volume measuring device is present, which improves the precision at use.

Advantageously the reception spaces may also in this case have a common bottom so that one of the reception spaces extends somewhat into or even in its entirety is constituted by the indentation in the other reception space. In this way three different measuring units are obtained in a simple manner. One can also consider to have several indentations arranged each constituting different level indicators in a first reception space and thereby defining different measuring volumes, and also constituting different measure units. This can either be done by arranging the indentations at different locations in for instance the bottom of the largest measure, at which however each indentation on one side defines a measure and each indentation also defines a precise filling volume, that is measure in the opposite reception space. Alternately an indentation may have the shape of a frustrum of a cone that in its bottom has an indentation in the shape of a frustrum of a cone so that the step provided more or less pyramidical structure is obtained were the steps each defines two different volumes, that is measures in each of the opposed reception spaces.

One can also consider the reception spaces facing away from each other having a common bottom provided with, seen from each direction, both indentation and protrusion that constitute measure indications. This will save material and simplify the manufacturing.

By arranging one (or several) vertical separate wall(-s) in one of the reception spaces the number of measuring units can be increased further, in particular since the measures next to each other can be used simultaneously or independently.

The volume measuring device may also be cup-like and be turned in different ways depending on the measuring volume that is to be used and be provided with handle so that a spoon- or ladle-like device is obtained.

Further advantageous developments of the invention are apparent from the subclaim and of the following description of a preferred embodiments with the reference to the enclosed drawing, were Fig 1 shows a first device in a longitudinal section, fig 2 shows second device in section and fig 3 shows a third device.

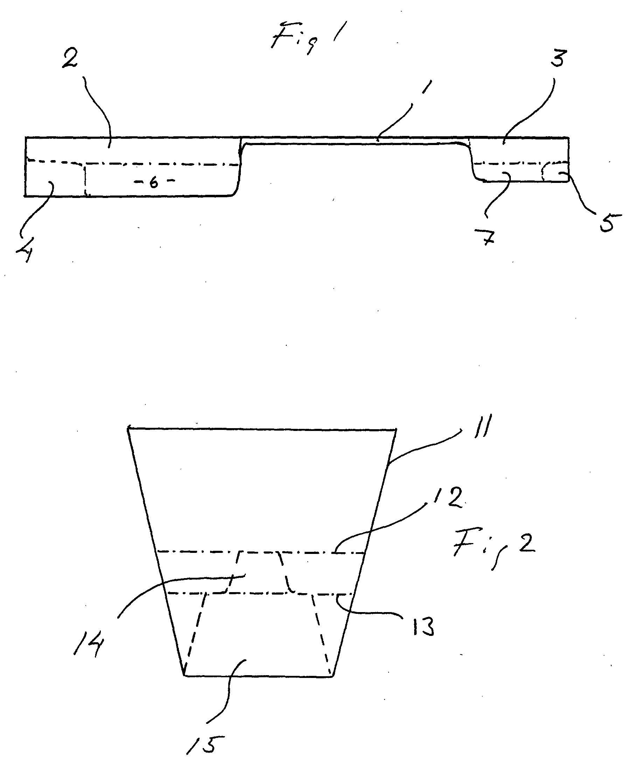

The preferred embodiment of the invention shown in fig 1 includes a longitudinal body 1 that in each outer end is provided with a first upper spoon or ladle measure-like hollow 2 and 3 respectively that serve as a first and second measure. On the bottom side (in each end) a second hollow or indentation 4 and 5 respectively are arranged serving as a second measure. The lower indentations or measures 4, 5 extend into the upper hollows for the major part as indentations in these bottoms. The height of the indentations over the bottom of the upper measures are further so chosen by means of the shape of the indentation that a third measure is achieved in the upper measures. This third measure or measuring unit corresponds to the volume that extend precisely up to the tip of the indentation. This means that a third measuring unit is obtained for each end of the measuring device according to the invention that can thus provide six different volume measuring units in the shown case. These can for instance be 1dl, 1/2dl, 1/4dl, tablespoon, teaspoon and spice measure.

In order to increase the number of possible measuring units one can also consider the device having the shape of a Y or an X with away from each other turned reception spaces in the outer ends of the arms.

The part connecting the two ends of the measuring device can furthermore be provided with one or several holes that in themselves constitute portion measures for spaghetti, alternately other functions may be integrated in the device.

By means of the invention it is thus possible to combine a large number of different measures in a very simple way where it very easily and quickly can be seen if the measure is appropriately filled. The so to say fully filled measures are of course particularly easy to see but also the inner measures are very easy to see fast since the marking are large in comparison to the faint marks for the degree of filling that may sometimes be found in deciliter measures and the like. Despite the amount of united measuring units each measure has the character of a spoon or ladle, that is they are in the outer end of the measuring device and it is consequently easy to handle the device as a spoon at the filling of the measures (as at the emptying), which facilitates a fast and safe handling. Since the different measures are collected to one device it becomes essentially more easy to keep track of the measures and the risk of taking the wrong measure is reduced since one always have the same set of measures at hand and therefor actually immediately see which the largest one is, the smallest etcetera. If so desired one can consider giving the different reception spaces or volume measures different colors to facilitate identification, in particular in connection with tutoring.

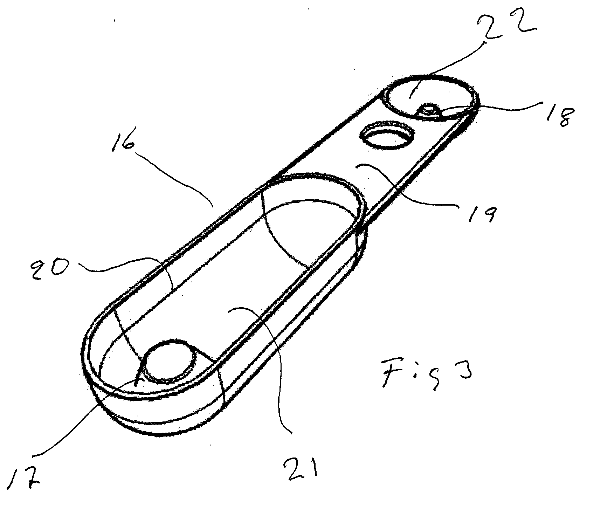

In fig 2 a cup-variety of the invention is shown, which in its entirety is to denoted 11. In the bottom of the cup an indentation 15 is arranged, which turn is provided with an indentation 14. In the shown position three measures are available for measuring, either the entire volume filled to level 12 corresponding to the tip of the indentation 14 or only to the level 13 of the indentation 15. If the cup is turned over there are two volumes or measures at hand, one corresponding only to the volume of the smaller indentation 14 and the second corresponding to the volume of the indentation 14 and the indentation 15. By arranging the indentations rotationally symmetrical the measuring cup can also be made stackable.

The combined measure 16 shown in fig 3 is for increased comfort rounded and furthermore the lower, small measures constituting, indentations 17 and 18 in the upper measures have been drawn in from the ends of the combined measure so that an even level can be obtained for the edges of these measures. Through this the measuring herewith is facilitated, since an inclined edge profile would require that the measure is inclined at the measuring, which is experienced as unnatural and difficult to keep track of since the view of the edge is so small. In the intermediate handle part 19 a trademark may at the manufacturing easily be embossed. In the largest measure 21 a level line 20 extends all around and corresponds to the level of the tip of the indentation so that the precision in the measuring is ascertained. At the smaller measure in the other end the indentation is centered in the upwards turned smaller measure 22 and the inclination therefor have considerably less influence on the precision in the measuring.

Within the frame of the inventive thought of course additional measuring units may be marked with level rings in the known manners in the ladle case as well as in the cup-variety.

By the integrated device with measures extending into each other the amount of material for the integrated measuring device according to the invention is minimized, which makes it light and it may also be shaped in for instance stainless steel sheets. By the integration of large as well as small measures also the washing of the small measures is facilitated.

For a good function it is desirable that each measure has an edge over which one can poor. This is also possible with for instance two measures close to each other, wall to wall so to say which two measures each with the above technique can be multiplied with for instance three. If one choose to arrange three measures next to each other nine measuring units can be achieved in one device.

## Claims

1. Device for measuring volume, in particular for cocking, baking, medication etcetera, **characterized in that** it is constituted of to a unit connected from each other facing receptions spaces for volume measuring.

2. Device according to claim 1, **characterized in that** at least one of the receptions spaces includes one or several indentations that extends up from the bottom or in from the edge wall and that when this reception space is filled up to the tip of this indentation or embossing this corresponds to an additional measuring unit.

3. Device according to claim 2, **characterized in that** the indentation constitutes the entire or apart of an other reception space.

4. Device according to claim 2 or 3, **characterized in that** the opposed reception spaces each have protrusions and indentations respectively doubling the number of possible measuring units.

5. Device according to any of the preceding claims, **characterized in that** opposed reception spaces are for volume measuring are arranged in the outer end of a shaft making a spoon- or the ladle-like device,

6. Device according to any of the preceding claims, **characterized in that** the reception spaces are arranged in both ends of a shaft, or in the outer ends of a Y- or X-shaped handle.

7. Device according to claim 6 or 6, **characterized in** the intermediate bridge or shaft part includes one or several openings constituting spaghetti measures.

8. Device according to claim 1, **characterized in that** it has the shape of a cup with an indentation in the bottom.

9. Device according to any preceding claims, **characterized in that** the indentation is provided with an indentation in turn constituting an additional measure.

10. Device according to claim 9, **characterized in that** the additional indentation also serve as a level mark in the opposed reception space (measure).
